Europäisches Patentamt

European Patent Office

Office européen des brevets

(11) Veröffentlichungsnummer: **0 318 117**
**A2**

(12) # EUROPÄISCHE PATENTANMELDUNG

(21) Anmeldenummer: **88202663.6**

(22) Anmeldetag: **24.11.88**

(51) Int. Cl.4: **H04N 3/185**

(30) Priorität: **25.11.87 DE 3739923**

(43) Veröffentlichungstag der Anmeldung:
**31.05.89 Patentblatt 89/22**

(84) Benannte Vertragsstaaten:
**DE FR GB IT**

(71) Anmelder: **Philips Patentverwaltung GmbH**
**Wendenstrasse 35 Postfach 10 51 49**
**D-2000 Hamburg 1(DE)**

(84) **DE**

Anmelder: **N.V. Philips' Gloeilampenfabrieken**
**Groenewoudseweg 1**
**NL-5621 BA Eindhoven(NL)**

(84) **FR GB IT**

(72) Erfinder: **Heinzerling, Hartmut, Dr.**
**Am Sündhang 10**
**D-5245 Brachbach(DE)**

(74) Vertreter: **Poddig, Dieter, Dipl.-Ing. et al**
**Philips Patentverwaltung GmbH**
**Wendenstrasse 35 Postfach 10 51 49**
**D-2000 Hamburg 1(DE)**

(54) **Schaltungsanordnung für ein Bildgerät.**

(57) Bei Bildgeräten mit Kathodenstrahlröhren wird deren Anodenspannung aus dem Rückschlagimpuls an einer entsprechenden Wicklung des Horizontalübertragers gewonnen, wobei diese Anodenspannungsquelle relativ hochohmig ist. Dadurch verringert sich bei steigendem Anodenstrom die Anodenspannung, und damit vergrößert sich das auf dem Bildschirm dargestellte Bild. Insbesondere bei Bildschirmgeräten für Textverarbeitung mit Positivdarstellung kann durch unterschiedliche Helligkeitseinstellung ein sehr unterschiedlicher Anodenstrom fließen. Um trotzdem eine weitgehend konstante Anodenspannung zu erzeugen, wird erfindungsgemäß in den Fußpunkt der Hochspannungswicklung eine Schaltungsanordnung angeordnet, die sich wie ein negativer Widerstand verhält. Diese enthält aktive Elemente und wird mit der Schirmgitterspannung gespeist, deren Wert ausreicht, die Anodenspannungsänderungen aufgrund wechselnder Anodenströme zu kompensieren. Es sind ferner Beispiele für den Aufbau der den negativen Widerstand bildenden Schaltungsanordnung angegeben.

Fig.1

## Schaltungsanordnung für ein Bildgerät

Die Erfindung betrifft eine Schaltungsanordnung für ein Bildgerät mit einer Kathodenstrahlröhre, deren Anodenspannung eine Spannungsquelle liefert, die im wesentlichen aus einer Wicklung eines Übertragers und einem an deren einen Ende angeschlossenen Gleichrichter besteht, wobei das andere Ende der Wicklung mit einem Bezugspotential gekoppelt ist.

Bildschirmgeräte mit Kathodenstrahlröhren sind allgemein bekannt, beispielsweise als Fernsehgeräte oder auch als Peripheriegeräte für Computer zum Verarbeiten von beispielsweise Text und Grafik. Dabei wird die hohe Anodenspannung aus den Rückschlagimpulsen des Horizontalübertragers gewonnen, an den auch die Horizontalablenkspulen angeschlossen sind. Eine so gebildete Spannungsquelle für die Anodenspannung weist jedoch einen relativ hohen Innenwiderstand auf. Eine Änderung der Anodenspannung bewirkt jedoch bekanntlich auch eine Änderung der Größe des auf dem Bildschirm dargestellten Bildes.

Bildschirmgeräte für den Anschluß an Computer für insbesondere Textverarbeitung arbeiten häufig mit der sogenannten "Positivdarstellung", d.h. die Zeichen wie Buchstaben, Ziffern usw. werden dunkel auf einem hellen Hintergrund abgebildet, wie dies normalerweise auch auf Papier erfolgt. Dabei ist praktisch der größte Teil der Bildoberfläche hell erleuchtet, so daß in der Kathodenstrahlröhre in Abhängigkeit von der eingestellten Bildhelligkeit ein stark unterschiedlich großer Anodenstrom fließt.

Häufig verwendete Maßnahmen zur Bildgrößenstabilisierung verwenden eine Spannungsquelle mit einem relativ großen Innenwiderstand zur Speisung der Ablenkspulen, wovon auch die Anodenspannung abgeleitet ist, so daß bei einem höheren Anodenstrom auch die Amplitude des Ablenksignals kleiner wird, jedoch ändert sich mit der Anodenspannung auch die Geometrie des Elektronenstrahls, insbesondere verändert sich die Punktschärfe.

Aufgabe der Erfindung ist es daher, eine Schaltungsanordnung der eingangs genannten Art anzugeben, die auch bei verschiedenen Anodenströmen eine weitgehend konstante Anodenspannung erzeugt.

Gemäß der Erfindung wird die angegebene Aufgabe dadurch gelöst, daß zwischen dem anderen Ende der Wicklung und dem Bezugspotential eine Kompenstationsschaltung eingefügt ist, die sich als negativer Widerstand verhält, dessen Absolutwert weitgehend gleich dem Wert des Innenwiderstandes der Spannungsquelle ohne die Widerstandsschaltung ist.

Schaltungen zur Stabilisierung von Spannungen gegenüber veränderlicher Strombelastung sind grundsätzlich bekannt; sie beruhen normalerweise auf einer Regelung mit einem Soll-Istwertvergleich. Da die zu stabilisierende Anodenspannung ca. 15 kV beträgt, wird in der vorliegenden Erfindung die Spannungsstabilisierung mit einer anderen Methode, nämlich durch die Verwendung einer Kompensationsschaltung mit der Charakteristik eines negativen Widerstandes, erreicht.

Die erfindungsgemäße Schaltungsanordnung greift also an dem "Niederspannungsende" der Wicklung zur Erzeugung der Anodenspannung an. Dadurch werden die verwendeten elektronischen Bauelemente nur mit den zu kompensierenden Spannungsdifferenzen belastet und nicht etwa mit der vollen Hochspannung von 15 kV. Da bei einer vorgegebenen Ausführung der Kathodenstrahlröhre mit der zugehörigen Beschaltung der Innenwiderstand der Spannungsquelle für die Anodenspannung praktisch vorgegeben ist, kann durch eine entsprechende Dimensionierung der Kompensationsschaltung eine weitgehende Stabilisierung der Anodenspannung bei unterschiedlichen Anodenströmen auf einfache Weise erreicht werden, wobei der Bauteilaufwand sehr niedrig ist.

Eine Kompensationsschaltung, die sich als negativer Widerstand verhält, kann nur mit Hilfe von aktiven Elementen aufgebaut werden, die eine Speisespannung erfordern. Diese Speisespannung muß größer sein als die maximalen Änderungen der Anodenspannung, die durch die Widerstandsschaltung kompensiert werden sollen. Bei Kathodenstrahlröhren ist jedoch nicht nur eine sehr hohe Anodenspannung erforderlich, sondern auch mindestens eine Spannungsquelle zur Speisung eines Schirmgitters. Eine Ausgestaltung der Erfindung ist daher dadurch gekennzeichnet, daß die Kompensationsschaltung durch eine Schaltungsanordnung mit aktiven Elementen gebildet ist, die von einer Schirmgitterspannungsquelle gespeist ist. Diese Schirmgitterspannungsquelle ist ohnehin stets vorhanden und hat bei üblicher Dimensionierung eine Spannung, die größer ist als die Änderung der Anodenspannung bei unterschiedlichen Anodenströmen.

Eine einfache Realisierung der Kompensationsschaltung ist dadurch gekennzeichnet, daß die Kompensationsschaltung eine erste Reihenschaltung eines npn-Transistors, eines ersten Widerstandes und eines pnp-Transistors zwischen einer positiven Speisespannung und einer Bezugsspannung umfaßt, der eine zweite Reihenschaltung aus einem zweiten, einem dritten und einem vierten Widerstand parallelgeschaltet ist, wobei die Verbindungspunkte dieser Widerstände mit den Basen der Transistoren verbunden sind und die Basis des pnp-Transistors den Anschluß für das andere Ende der Wicklung des Übertragers darstellt. Diese Realisierung hat auch den Vorteil, daß nur der npn-Transistor für eine hohe Spannung ausgelegt sein muß, während für den pnp-Transistor Typen mit kleiner maximaler Kollektor-Emitter-Spannung verwendet werden kann.

Eine andere Realisierung der Kompensationsschaltung ist dadurch gekennzeichnet, daß eine dritte Reihenschaltung aus einem ersten npn-Transistor, einem sechsten Widerstand und einem siebten Widerstand zwischen der positiven Speisespannung und einer Bezugsspannung angeordnet ist, wobei die Basis des ersten npn-Transistors über einen achten Widerstand mit der positiven Speisespannung und über einen zweiten npn-Transistor mit dem Verbindungspunkt des sechsten und siebten Widerstandes und die Basis des zweiten npn-Transistors über einen neunten Widerstand mit dem Emitter des ersten npn-Transistors verbunden ist und den Anschluß für das andere Ende der Wicklung bildet. Diese Ausführung erfordert noch weniger Aufwand.

Ausführungsbeispiele der Erfindung werden nachstehend anhand der Zeichnung näher erläutert. Es zeigen

Fig. 1 die für die Erfindung wesentlichen Teile eines Bildgeräts mit einer Kathodenstrahlröhre,

Fig. 2 eine Ausführung einer Kompensationsschaltung, die sich als negativer Widerstand verhält,

Fig. 3 eine andere Ausführung der Kompensationsschaltung.

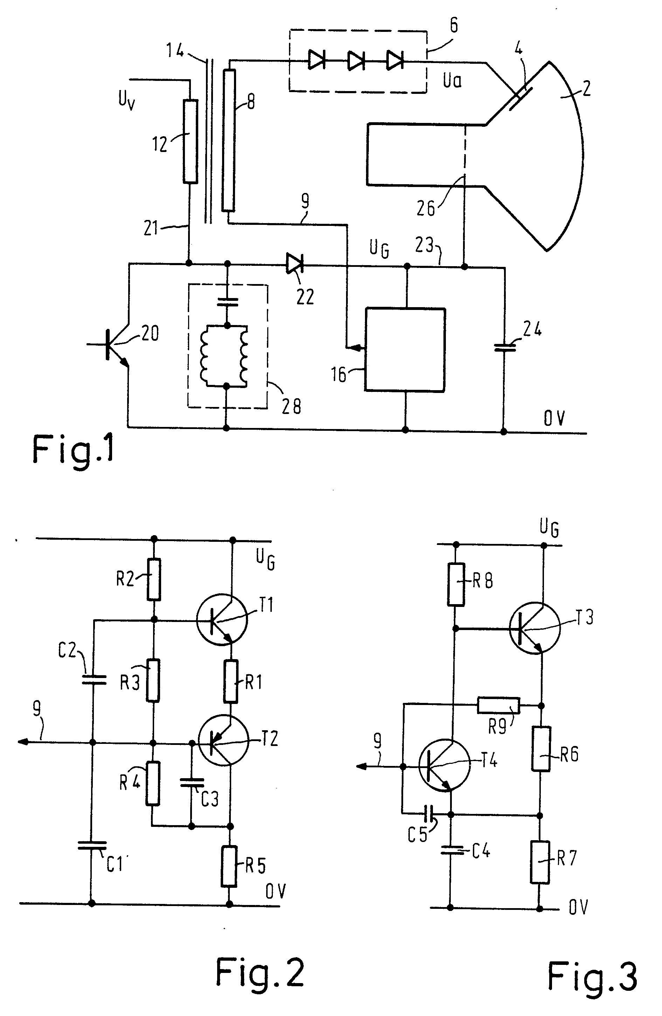

Bei der in Fig. 1 dargestellten Schaltungsanordnung wird die Anodenspannung $U_a$ der Anode 4 einer Kathodenstrahlröhre 2 von einer Gleichrichterkaskade 6 erzeugt, die an das eine Ende einer Wicklung 8 eines Übertragers 14 angeschlossen ist. Der Übertrager 14 weist außer anderen, nicht näher dargestellten Wicklungen eine Eingangswicklung 12 auf, deren eines Ende mit einer Versorgungsspannung $U_v$ und deren anderes Ende über die Leitung 21 mit dem Kollektor eines Schalttransistors 20 verbunden ist. Dieser Schalttransistor 20 wird mit einem horizontalfrequenten Signal angesteuert, und mit der Leitung 21 ist ferner die Ablenkkombination 28 zur horizontalen Ablenkung des Elektronenstrahls in der Kathodenstrahlröhre 2 angeschlossen. Wenn der Schalttransistor 20 leitend ist, fließt durch die Wicklung 12 und die Horizontalkombination 28 ein Strom, der ein Magnetfeld aufbaut. Wenn der Schalttransistor 20 abgeschaltet wird, erzeugt der Abbau dieses Magnetfeldes eine hohe Impulsspannung an dem oberen Ende der Wicklung 8, die über die Gleichrichterkaskade 6 die Anodenspannung $U_a$ liefert. Gleichzeitig entsteht auf der Leitung 21 ein positiver Spannungsimpuls, der über eine Diode 22 einen Kondensator 24 auflädt und damit auf der Leitung 23 eine Spannung $U_G$ erzeugt, die dem Schirmgitter 26 der Kathodenstrahlröhre 2 zugeführt wird.

Das untere Ende der Wicklung 8 ist nun nicht unmittelbar mit einer Bezugsspannung verbunden, sondern mit einer Anordnung 16, die aktive Elemente enthält und von der Schirmgitterspannung auf der Leitung 23 gespeist wird. Diese Anordnung 16 verhält sich für den daraus über die Leitung 9 herausfließenden Anodenstrom wie ein negativer Widerstand, d.h. mit steigendem Anodenstrom wird die Spannung auf der Leitung 9 positiver. Es wird also ein vom Anodenstrom abhängiger Teil der Schirmgitterspannung auf der Leitung 23 gegenüber der Bezugsspannung 0V addiert. Auf diese Weise kann bei entsprechender Dimensionierung der Anordnung 16 der Abfall der Anodenspannung $U_a$ bei steigendem Anodenstrom weitestgehend kompensiert werden.

Schaltungen, die sich als negativer Widerstand verhalten, sind grundsätzlich bekannt und enthalten beispielsweise einen mit Widerständen beschalteten Operationsverstärker. Die bekannten Schaltungen sind jedoch überwiegend für niedrige Spannungen geeignet und erfordern für höhere Spannungen einen wesentlichen Aufwand. Eine einfache Kompensationsschaltung, die für die Anordnung 16 verwendet werden kann, ist in Fig. 2 dargestellt. Diese enthält zwischen der Speisespannung $U_G$ und der Bezugsspannung 0V eine erste Reihenschaltung aus einem npn-Transistor T1, einem ersten Widerstand R1, einem pnp-Transistor T2 und einem weiteren Widerstand R5. Der Widerstand R1 verbindet dabei die Emitter der beiden Transistoren T1 und T2. Ferner enthält die Schaltung eine weitere Reihenschaltung aus drei Widerständen R2, R3 und R4 zwischen der Speisespannung $U_G$ und dem Kollektor des Transistors T2. Die Verbindungspunkte dieser drei Widerstände sind mit der Basis je eines Transistors T1 und T2 verbunden. Die Leitung 9 nach Fig. 1 ist an der Basis des Transistors T2 angeschlossen. Ferner ist noch ein Kondensator C1 zwischen diesem Anschlußpunkt und dem Bezugspotential 0V vorgesehen. der den Wechselstromanteil des Anodenstroms ableitet. Ein Kondensator C2 parallel zum Widerstand R3 sowie ein weiterer Kondensator C3 zwischen dem Kollektor und der Basis des Transistors T2 unterdrücken eine Schwingneigung der dargestellten Anordnung.

Wenn der auf der Leitung 9 herausfließende Anodenstrom größer wird, erhält der Transistor T2 einen höheren Basisstrom und damit auch einen höheren Emitter-Kollektor-Strom, der auch den Transistor T1 stärker leitend macht. Dadurch wird dessen Emitter-Kollektor-Spannung kleiner, d.h. der Emitter des Transistors T1 und damit auch der Emitter des Transistors T2 nehmen eine höhere Spannung an, und damit wird auch die Spannung auf der Leitung 9 bei steigendem Strom größer. Es wird also mit steigendem Strom auf der Leitung 9 ein größerer Anteil der Spannung $U_G$ aufgeprägt. Der Anschluß der Anordnung für die Leitung 9 verhält sich somit wie ein negativer Widerstand. Ein Vorteil dieser Anordnung ist außerdem, daß nur der Transistor T1 für eine hohe Spannung ausgelegt sein muß, während für den Transistor T2 ein Transistor mit einer niedrigen maximalen Emitter-Kollektor-Spannung verwendet werden kann.

Für die Dimensionierung der Schaltungselemente gilt folgendes:

- R5 bestimmt maßgeblich den Leistungsverbrauch der Schaltung und sollte deshalb so groß wie möglich gewählt werden. Auf der anderen Seite muß er so klein sein, daß die Sperrströme der beiden in Serie geschalteten Transistoren noch keinen störenden Spannungsabfall hervorrufen. Ein Wert von z.B. 200 kOhm ist ein guter Kompromiß: N = 1,25 W bei 500V.

- Der Widerstand R2 soll bei einer verbleibenden Spannungsdifferenz von < 200V genügend Basisstrom für T1 liefern, um 2,5 mA Emitterstrom zu erreichen. Bei der relativ hohen Kollektorspannung von 200V ist eine Stromverstärkung von 60 leicht zu garantieren, so daß ein Widerstand von 5 MOhm ausreicht. Der Widerstand R2 soll so groß wie möglich sein, da sein Querstrom eine Vorlast für den Widerstand R5 darstellt.

- Die Widerstände R1 und R3 bilden eine Gegenkopplung u.a. zur Temperaturstabilisierung, ein Wert von 1,2 kOhm für R1 und 270 kOhm für R3 haben sich als zweckmäßig herausgestellt.

- Der Widerstand R4 stellt eine Stromgegenkopplung für den Verstärker dar und bestimmt somit den wirksamen Wert des negativen Widerstandes. Mit den bisher angegebenen Werten der übrigen Widerstände erhält man mit einem Widerstandswert von R4 = 2MOhm einen wirksamen (negativen) Widerstandswert der Kompensationsschaltung von etwa - 4 MOhm. Somit bewirkt eine Zunahme des Anodenstroms der Bildröhre um 100 µA eine Spannungserhöhung um ca. 400V an Punkt 9.

Eine andere Kompensationsschaltung, die für die Anordnung 16 in Fig. 1 verwendet werden kann, ist in Fig. 3 dargestellt. Diese enthält ebenfalls zwei Transistoren T3 und T4, die hier jedoch beide npn-Transistoren sind. Der Kollektor des Transistors T3 ist mit der positiven Speisespannung $U_G$ verbunden, und der Emitter führt über die Reihenschaltung zweier Widerstände R6 und R7 auf das Bezugspotential, das hier 0V ist. Die Basis des Transistors T3 ist über einen Widerstand R8 mit der positiven Speisespannung UG und mit dem Kollektor eines weiteren Transistors T4 verbunden, dessen Emitter auf den Verbindungspunkt der beiden Widerstände R6 und R7 führt. Die Basis des weiteren Transistors T4 ist über einen Widerstand R9 mit dem Emitter des Transistors T3 und über einen Kondensator C5 mit seinem Emitter verbunden und stellt außerdem den Anschlußpunkt für die Leitung 9 nach Fig. 1 dar. Ein weiterer Kondensator C4 ist parallel zum Widerstand R7 angeordnet. Die Kondensatoren übernehmen den hochfrequenten Wechselstromanteil des Anodenstroms und unterdrücken eine eventuelle Schwingneigung der Schaltung.

Wenn der über die Leitung 9 herausfließende Strom größer wird, wird ein größerer Anteil des über den Widerstand R9 zur Basis des Transistors T4 fließenden Stroms abgeleitet, so daß letzterer weniger leitet und der Spannungsabfall am Widerstand R8 geringer wird. Dadurch steigt jedoch die Spannung am Emitter des Transistors T3 und damit auch die Spannung am Verbindungspunkt der Widerstände R6 und R7, was wiederum zur Folge hat, daß die Spannung auf der Leitung 9 positiver wird. Die Dimensionierung ist ähnlich wie bei der Schaltung nach Fig. 2, d.h. der Widerstand R8 hat einen sehr großen Wert, während für den Widerstand R7 im wesentlichen die für den Widerstand R5 in Fig. 2 gemachte Aussage gilt. Der Widerstand R9 stellt wieder eine Stromgegenkopplung für den Verstärker dar und beeinflußt hauptsächlich den wirksamen Wert des negativen Widerstands.

Es sei bemerkt, daß als Bezugsspannung auch die negative Gittervorspannung verwendet werden kann, um den Spannungshub zu vergrößern. Ferner kann anstelle des Widerstands R2 in Fig. 2 bzw. R8 in Fig. 3 der sogenannte Bleeder-Widerstand verwendet werden, der in fast allen handelsüblichen Hochspannungskaskaden vorhanden ist.

## Ansprüche

1. Schaltungsanordnung für ein Bildgerät mit einer Kathodenstrahlröhre, deren Anodenspannung eine Spannungsquelle liefert, die im wesentlichen aus einer Wicklung eines Übertragers und einem an deren einen Ende angeschlossenen Gleichrichter besteht, wobei das andere Ende der Wicklung mit einem Bezugspotential gekoppelt ist, dadurch gekennzeichnet, daß zwischen dem anderen Ende der Wicklung (8) und dem Bezugspotential (0V) eine Kompensationsschaltung (16) eingefügt ist, die sich als negativer Widerstand verhält, dessen Wert im wesentlichen dem Wert des Innenwiderstandes der Spannungsquelle ohne die Widerstandsschaltung entspricht.

2. Schaltungsanordnung nach Anspruch 1, dadurch gekennzeichnet, daß die Widerstandsschaltung (16) durch eine Schaltungsanordnung mit aktiven Elementen gebildet ist, die von der Spannungsquelle (22, 24) zur Speisung des Schirmgitters (26) der Kathodenstrahlröhre (2) gespeist ist.

3. Schaltungsanordnung nach Anspruch 1 oder 2, dadurch gekennzeichnet, daß die Kompensationsschaltung (16) eine erste Reihenschaltung eines npn-Transistors (T1), eines ersten Widerstandes (R1) und eines pnp-Transistors (T2) zwischen einer positiven Speisespannung ($U_G$) und einen Schaltungspunkt umfaßt, der eine zweite Reihenschaltung aus einem zweiten, einem dritten und einem vierten Widerstand (R2, R3, R4) parallelgeschaltet ist, wobei der Schaltungspunkt über einen fünften Widerstand (R5) mit einer Bezugsspannung (0V) verbunden ist und die Verbindungspunkte des zweiten, dritten und vierten Widestandes mit den Basen der Transistoren (T1, T2) verbunden sind und die Basis des pnp-Transistors (T2) den Anschluß (9) für das andere Ende der Wicklung (8) des Übertragers (14) darstellt.

4. Schaltungsanordnung nach Anspruch 1 oder 2, dadurch gekennzeichnet, daß eine dritte Reihenschaltung aus einem ersten npn-Transistor (T3), einem sechsten Widerstand (R6) und einem siebten Widerstand (R7) zwischen der positiven Speisespannung ($U_G$) und einer Bezugsspannung (0V) angeordnet ist, wobei die Basis des ersten npn-Transistors (T3) über einen achten Widerstand (R8) mit der positiven Speisespannung ($U_G$) und über einen zweiten npn-Transistor (T4) mit dem Verbindungspunkt des sechsten und siebten Widerstandes (R6, R7) und die Basis des zweiten npn-Transistors über einen neunten Widerstand (R9) mit dem Emitter des ersten npn-Transistors (T3) verbunden ist und den Anschluß (9) für das andere Ende der Wicklung (8) bildet.

Fig.1

Fig.2

Fig.3

PHD87-251